# EUROPÄISCHE PATENTSCHRIFT

(11) **EP 0 410 527 B1**
(45) Veröffentlichungstag und Bekanntmachung des Hinweises auf die Patenterteilung: **16.06.1993**
(21) Anmeldenummer: 90201997.5
(22) Anmeldetag: 23.07.1990
(51) Int. Cl.: A47J 43/07, B01F 15/00

(54) **Quirl für eine Küchenmaschine**
Whisk for a food processor
Fouet pour un robot de cuisine

(30) Priorität: 27.07.1989 AT 1816/89
(43) Veröffentlichungstag der Anmeldung: 30.01.1991
(73) Patentinhaber: Philips Electronics N.V., 5621 BA Eindhoven (NL)
(72) Erfinder: Bukoschek, Romuald Leander, NL-5656 AA Eindhoven (NL); Huss, Herbert, NL-5656 AA Eindhoven (NL)
(74) Vertreter: Bos, Kornelis Sjoerd

(56) Entgegenhaltungen:
- CH-A- 471 190
- DE-A- 1 579 447
- GB-A- 2 188 495
- US-A- 2 749 098

## Beschreibung

Die Erfindung betrifft einen Quirl für eine Küchenmaschine, der einen Schaft aufweist, von dem in radialer Richtung, gleichmäßig winkelversetzt mindestens vier bogenförmig ausgebildete Bügel auskragen, die an ihren auskragenden Enden miteinander verbunden sind. Die GB-OS 2 188 495 zeigt derartige Quirl, die vier bogenförmig ausgebildete Bügel aufweisen, die von einem Ende eines Schaftes auskragen und in einer axialen Richtung des Schaftes gesehen einen Bogen von 180° beschreiben, wobei ihre vom Schaft auskragenden Enden unmittelbar miteinander verbunden sind, so daß der Quirl insgesamt gesehen einen einstückigen Teil bildet. Da diese Quirl nur vier Bügel aufweisen, ist ihre Schlag- und Mischwirkung relativ begrenzt. Außerdem lassen sich solche Quirl nur relativ schwer als einstückiger Teil herstellen, da das Entformen aus dem Werkzeug Schwierigkeiten bereitet, weil die Bügel in einer axialen Richtung des Schaftes gesehen einen Bogen von 180° beschreiben, wobei die beiden jeweils einander diametral gegenüberliegenden Bügel zusammen einen in sich geschlossenen, um 360° verlaufenden Bogen bilden.

Die Erfindung hat sich zum Ziel gesetzt, einen Quirl der eingangs angeführten Gattung so auszubilden, daß er einerseits eine gute Schlag- und Mischwirkung ergibt und andererseits einfach als einstückiger Teil herzustellen ist. Erfindungsgemäß ist hiezu vorgesehen, daß mehr als vier bogenförmige Bügel vorgesehen sind, daß zur Verbindung der auskragenden Enden der bogenförmigen Bügel ein konzentrisch zum Schaft und mit radialem Abstand gegenüber demselben verlaufender Ring vorgesehen ist, in den die Bügel mit ihren vom Schaft auskragenden Enden münden, und daß in einer Umfangsrichtung des Ringes gesehen gleichmäßig verteilt, abwechselnd eine Anzahl Bügel in einer axialen Richtung des Schaftes und eine weitere Anzahl Bügel in der entgegengesetzten axialen Richtung des Schaftes bogenförmig verlaufen. Durch eine derartige Anordnung und Ausbildung der bogenförmigen Bügel dahingehend, daß gleichmäßig verteilt, abwechselnd die Bügel einerseits in einer axialen Richtung des Schaftes und andererseits in der entgegengesetzten axialen Richtung des Schaftes bogenförmig verlaufen, wird eine sehr gute Schlag- und Mischwirkung erreicht, da die Bügel aufeinanderfolgend das zu verarbeitende Gut, wie beispielsweise Milch für die Herstellung von Milchmixgetränken, von oben nach unten und wiederum von unten nach oben im Mixbehälter befördern, wodurch sehr gut Luft in das Gut eingezogen und es daher sehr gleichmäßig verarbeitet wird. Es hat sich gezeigt, daß mit einem solchen Quirl auch sehr gut bei relativ niedrigen Drehzahlen, beispielsweise mit 1800 Umdrehungen pro Minute, gearbeitet werden kann, wodurch eine gute Schlagkraft erhalten wird. Weiters ergibt eine derartige Anordnung und Ausbildung der bogenförmigen Bügel auch beim Vorsehen einer größeren Anzahl von Bügeln, wie dies für eine gute Arbeitsweise des Quirls erwünscht ist, eine einfache Entformbarkeit des Quirls aus dem Werkzeug, da die einzelnen Bügel keinen in einer axialen Richtung des Schaftes um 180° verlaufenden Bogen bilden, wodurch ein einfaches zweiteiliges Werkzeug zur Herstellung des einstückigen Quirls verwendet werden kann, das dann in axialer Richtung des Schaftes geöffnet wird. Außerdem wird durch das Vorsehen des Ringes, in den die Bügel mit ihren vom Schaft auskragenden Enden münden und der somit diese Enden miteinander verbindet, eine sehr gute Festigkeit beziehungsweise Stabilität der bogenförmigen Bügel erreicht, wodurch der Quirl auch zur Verarbeitung von Gütern mit festerer Konsistenz, wie beispielsweise von in das zu verarbeitende Gut einzumischendem Speiseeis, sehr gut geeignet ist. Insgesamt gesehen wird somit ein Quirl erhalten, der sehr gute Arbeitseigenschaften aufweist und der einfach als einstückiger Teil hergestellt werden kann.

Erwähnt sei, daß aus der DE-OS 15 79 447 eine Knet- oder Rührvorrichtung bekannt ist, bei der als ein spezielles Werkzeug ein Aufsteckteil auf ein Knet- oder Rührwerkzeug vorgesehen ist, der einen Ring aufweist, von dem speichenartig halbkreisförmige Bügel ausgehen, die alle in einer Richtung bogenförmig orientiert sind, so daß der Aufsteckteil insgesamt gesehen schalenartig aufgebaut ist. Es hat sich gezeigt, daß bei einer solchen nur einseitigen bogenförmigen Orientierung der Bügel nur eine begrenzte Schlag- und Mischwirkung erreichbar ist, weil die Bügel das zu verarbeitende Gut vorwiegend nur in einer Richtung in Bewegung setzen. Demgegenüber sind bei einem erfindungsgemäßen Quirl, der als einstückiger Teil ausgebildet ist, die Bügel so angeordnet und ausgebildet, daß sie abwechselnd einerseits in einer axialen Richtung des Schaftes und andererseits in der entgegengesetzten axialen Richtung des Schaftes bogenförmig verlaufen, wodurch eine sehr gute Schlag- und Mischwirkung erreicht wird.

Hinsichtlich der Anzahl der vorgesehenen Bügel und ihrer Anordnung bezüglich ihrer bogenförmigen Orientierungen in den beiden axialen Richtungen des Schaftes gesehen besteht eine Reihe von Möglichkeiten. So können beispielsweise die Bügel paarweise gleich bogenförmig orientiert sein, so daß zwei in Umfangsrichtung des Ringes gesehen aufeinanderfolgende Bügel in einer axialen Richtung des Schaftes und die darauffolgenden beiden Bügel in der entgegengesetzten axialen Richtung des Schaftes bogenförmig verlaufen. Ebenso können beispielsweise zwei Bügel in einer axialen Richtung des Schaftes und der darauffolgende Bügel für sich in der entgegengesetzten axialen Richtung des Schaftes bogenförmig verlaufen, wobei insgesamt beispielsweise neun, zwölf oder fünfzehn Bügel vorgesehen sein können. Die aufeinanderfolgenden in den beiden axialen Richtungen des Schaftes bogenförmig orientierten Bügel bilden somit jeweils eine Gruppe von Bügeln, wobei sich dann die Gesamtanzahl der Bügel des Quirls als ganzzahliges Vielfaches der Anzahl Bügel einer Gruppe ergibt, wodurch über 360° gesehen eine gleichmäßig abwechselnde Verteilung der Bügel hinsichtlich ihrer bogenförmigen Orientierungen erreicht wird. In diesem Zusammenhang hat sich jedoch als besonders vorteilhaft erwiesen, wenn in einer Umfangsrichtung des Ringes gesehen unmittelbar aufeinanderfolgend jeweils ein Bügel in einer axialen Richtung des Schaftes und der darauffolgende Bügel in der entgegengesetzten axialen Richtung des Schaftes bogenförmig verläuft. Auf diese Weise wird das zu verarbeitende Gut von den Bügeln unmittelbar aufeinanderfolgend in unterschiedlichen Richtungen in Bewegung versetzt, wodurch gute Mischeigenschaften des Quirls erhalten werden, wobei der Quirl selbst außerdem noch eine hohe Festigkeit beziehungsweise Stabilität aufweist, da die vom Schaft auskragenden Enden der Bügel unmittelbar aufeinanderfolgend von entgegengesetzten Seiten her in den Ring münden.

Hinsichtlich der Formgebung für die bogenförmigen Bügel an sich besteht ebenfalls eine Reihe von Möglichkeiten. So können die Bügel beispielsweise elliptisch oder vieleckig ausgebildet werden, wobei sie Bögen von 90° oder 180° bilden können. Als besonders vorteilhaft hat sich aber erwiesen, wenn die bogenförmigen Bügel halbkreisförmig ausgebildet sind. Es hat sich gezeigt, daß bei einer derartigen Ausbildung der Bügel sehr gute Arbeitseigenschaften des Quirls erhalten werden, wobei insbesondere ein Spritzen des zu verarbeitenden Gutes weitgehendst vermieden wird.

Hinsichtlich der Anzahl der vorzusehenden bogenförmigen Bügel ist festzustellen, daß dadurch die Arbeitseigenschaften des Quirls wesentlich beeinflußt werden können. Wird nur eine geringe Anzahl von Bügeln vorgesehen, wie beispielsweise beim eingangs angeführten bekannten Quirl, so dauert es relativ lange, bis das zu verarbeitende Gut einwandfrei durchgemischt ist. Wird die Anzahl der Bügel zu groß gewählt, so ergibt sich ebenfalls eine relativ lange Bearbeitungszeit, da die Bügel rasch aufeinanderfolgend das Gut bearbeiten, so daß es nicht genügend Zeit findet, um dem Mischvorgang folgen zu können. In diesem Zusammenhang hat sich als besonders vorteilhaft erwiesen, wenn die Anzahl der bogenförmigen Bügel mit zwölf gewählt ist. Mit einer solchen Anzahl von bogenförmigen Bügeln werden besonders gute Schlag- und Mischeigenschaften des Quirls erhalten und somit eine kurze Bearbeitungszeit erreicht.

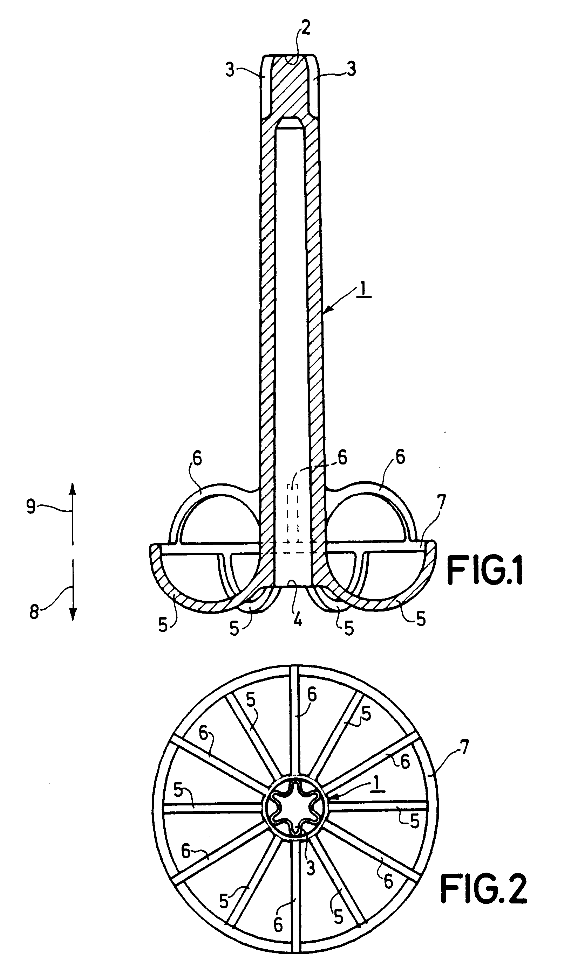

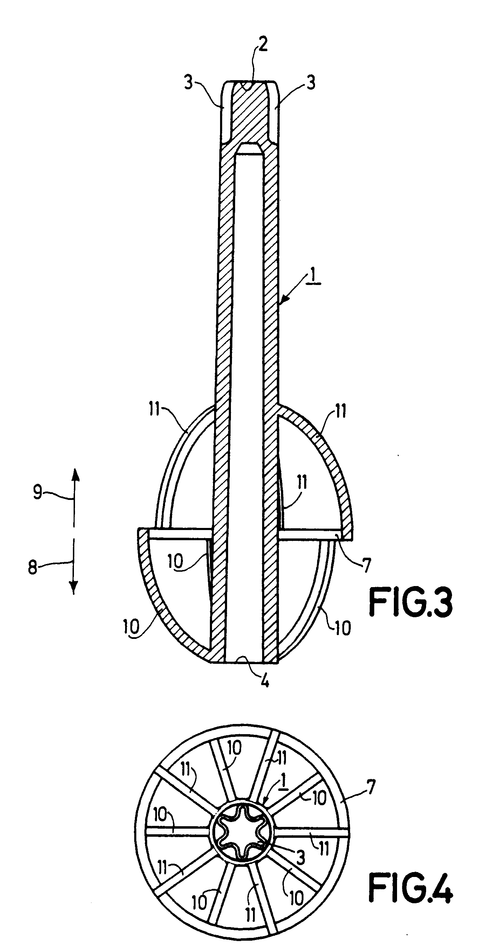

Die Erfindung wird im folgenden anhand der Zeichnungen, in welchen zwei Ausführungsbeispiele der Erfindung dargestellt sind, auf die sie jedoch nicht beschränkt sein soll, näher erläutert. Fig.1 zeigt im Schnitt einen Quirl, bei dem die von seinem Schaft auskragenden bogenförmigen Bügel mit ihren freien Enden in einen diese Enden miteinander verbindenden Ring münden, wobei in einer Umfangsrichtung des Ringes gesehen unmittelbar aufeinanderfolgend jeweils ein Bügel in einer axialen Richtung des Schaftes und der darauffolgende Bügel in der entgegengesetzten axialen Richtung des Schaftes bogenförmig verläuft und die Bügel selbst halbkreisförmig ausgebildet sind. Fig.2 zeigt den Quirl nach Fig.1 in Draufsicht vom Schaft her. Fig.3 zeigt im Schnitt einen Quirl, bei dem die bogenförmigen Bügel elliptisch ausgebildet sind, wobei sie einen Bogen von 90° beschreiben. Fig.4 zeigt den Quirl nach Fig.3 in Draufsicht vom Schaft her.

Der in den Figuren 1 und 2 dargestellte Quirl weist einen Schaft 1 auf, der an seinem einen Ende 2 mit mehreren Rippen 3 versehen ist, die in üblicher Weise zur formschlüssigen Kupplung mit einem Antriebsteil einer Küchenmaschine dienen, um den Quirl in Drehung zu versetzen. Vom anderen Ende 4 des Schaftes 1 kragen in radialer Richtung gleichmäßig winkelversetzt eine Anzahl bogenförmig ausgebildeter Bügel 5 beziehungsweise 6 aus, welche die Schlag- und Mischwerkzeuge des Quirls bilden. Beim vorliegenden Ausführungsbeispiel ist insgesamt eine Anzahl von zwölf bogenförmigen Bügeln 5 und 6 vorgesehen, die mit ihren vom Schaft 1 auskragenden Enden in einen konzentrisch zum Schaft 1 und mit radialem Abstand gegenüber demselben verlaufenden Ring 7 münden, der somit die auskragenden Enden aller Bügel miteinander verbindet. Die Bügel 5 beziehungsweise 6 sind dabei im vorliegenden Fall halbkreisförmig ausgebildet, so daß sie einen Bogen von 180° beschreiben. Weiters sind die Bügel so angeordnet, daß von ihnen in einer Umfangsrichtung des Ringes 7 gesehen gleichmäßig verteilt, abwechselnd eine Anzahl von sechs Bügeln 5 in einer axialen Richtung des Schaftes 1, die durch den Pfeil 8 angegeben ist, und eine weitere Anzahl von sechs Bügeln 6 in der entgegengesetzten axialen Richtung des Schaftes 1, die durch den Pfeil 9 angegeben ist, bogenförmig verlaufen. Beim vorliegenden Ausführungsbeispiel ist die Anordnung der Bügel dabei zusätzlich so getroffen, daß in einer Umfangsrichtung des Ringes 7 gesehen unmittelbar aufeinanderfolgend jeweils ein Bügel 5 in der durch den Pfeil 8 angegebenen axialen Richtung des Schaftes 1 und der darauffolgende Bügel 6 in der durch den Pfeil 9 angegebenen entgegengesetzten axialen Richtung des Schaftes 1 bogenförmig verläuft.

Durch die beim vorliegenden Ausführungsbeispiel gewählte Ausbildung des Quirls wird eine besonders gute Schlag- und Mischwirkung desselben erreicht, da die Bügel 5 beziehungsweise 6 zufolge ihrer unmittelbar aufeinanderfolgenden unterschiedlichen bogenförmigen Orientierungen unmittelbar aufeinanderfolgend das zu verarbeitende Gut von oben nach unten und wiederum von unten nach oben im Mixbehälter befördern, wodurch sehr gut Luft in das Gut eingezogen und es daher sehr gleichmäßig verarbeitet wird, wobei auch ein Spritzen des zu verarbeitenden Gutes weitgehendst vermieden wird. Durch das Vorsehen des Ringes 7, der die vom Schaft 1 auskragenden Enden der Bügel 5 und 6 miteinander verbindet, wird dabei eine hohe Festigkeit und Stabilität des Quirls erhalten, so daß die Bügel auch eine relativ hohe Schlagkraft ausüben können, was insbesondere dann erforderlich ist, wenn ein Gut mit festerer Konsistenz verarbeitet werden soll, wie beispielsweise Speiseeis, das mit Milch zu einem Milchmixgetränk vermischt werden soll. Es hat sich dabei gezeigt, daß mit einem solchen Quirl auch sehr gut bei relativ niedrigen Drehzahlen, beispielsweise mit 1800 Umdrehungen pro Minute, gearbeitet werden kann, wodurch eine gute Schlagkraft erhalten wird. Als wesentlich hat sich auch die Anzahl der vorgesehenen Bügel erwiesen, die beim vorliegenden Ausführungsbeispiel mit zwölf gewählt ist, wodurch besonders gute Schlag- und Mischeigenschaften des Quirls erhalten werden und sich somit eine kurze Bearbeitungszeit ergibt. Wird nämlich nur eine geringe Anzahl von Bügeln vorgesehen, wie beispielsweise von vier Bügeln, so dauert es relativ lange, bis das zu verarbeitende Gut einwandfrei durchgemischt ist. Wird die Anzahl der Bügel zu groß gewählt, so ergibt sich ebenfalls eine relativ lange Bearbeitungszeit, da die Bügel rasch aufeinanderfolgend das Gut bearbeiten, so daß es nicht genügend Zeit findet, um dem Mischvorgang folgen zu können. Das Vorsehen von zwölf Bügeln hat sich in diesem Zusammenhang gerade als vorteilhaft erwiesen.

Ein weiterer wesentlicher Vorteil des im Vorstehenden beschriebenen Quirls besteht darin, daß er besonders einfach als einstückiger Teil hergestellt werden kann. Dies ist darauf zurückzuführen, daß die einzelnen Bügel 5 beziehungsweise 6 keinen in axialer Richtung des Schaftes 1 um 180° verlaufenden Bogen bilden, sondern in Bezug auf den Ring 7 abwechselnd in einer der beiden durch die Pfeile 8 beziehungsweise 9 angegebenen axialen Richtungen des Schaftes 1 bogenförmig um 180° verlaufend orientiert sind. Auf diese Weise kann ein einfaches zweiteiliges Werkzeug zur Herstellung des einstückigen Quirls verwendet werden, das in der Ebene des Ringes 7 geteilt ist und in axialer Richtung des Schaftes 1 geöffnet werden kann. Ein solcher Quirl ist daher sehr preisgünstig herzustellen.

Beim Ausführungsbeispiel nach den Figuren 3 und 4 weist der Quirl insgesamt eine Anzahl von zehn bogenförmigen Bügeln 10 und 11 auf, die hier elliptisch ausgebildet sind und einen Bogen von 90° beschreiben. Die Bügel 10 kragen dabei unmittelbar vom Ende 4 des Schaftes 1 aus, wogegen die Bügel 11 von einem mehr zur Mitte des Schaftes 1 hin gelegenen Abschnitt desselben auskragen. Die vom Schaft 1 auskragenden Enden aller Bügel 10 und 11 münden dabei wieder in einen Ring 7, der diese Enden miteinander verbindet. Weiters ist auch hier wieder vorgesehen, daß in einer Umfangsrichtung des Ringes 7 gesehen unmittelbar aufeinanderfolgend jeweils ein Bügel 10 in der durch den Pfeil 8 angegebenen axialen Richtung des Schaftes 1 und der darauffolgende Bügel 11 in der durch den Pfeil 9 angegebenen entgegengesetzten axialen Richtung des Schaftes 1 bogenförmig verläuft.

Auf diese Weise wird wieder ein Quirl erhalten, der gute Schlag- und Mischeigenschaften bei guter Festigkeit beziehungsweise Stabilität der bogenförmigen Bügel 10 und 11 aufweist und der ebenfalls wieder einfach als einstückiger Teil hergestellt werden kann, dies zufolge der in Bezug auf den Ring 7 unterschiedlichen bogenförmigen Orientierungen der Bügel 10 beziehungsweise 11.

Wie aus dem Vorstehenden ersichtlich ist, besteht im Rahmen der Erfindung eine Reihe von Abwandlungsmöglichkeiten für die Ausbildung eines erfindungsgemäßen Quirls. Dies gilt insbesondere im Hinblick auf die Anordnung und Ausbildung sowie die Anzahl der vorgesehenen bogenförmigen Bügel, welche die Schlag- und Mischwerkzeuge des Quirls bilden.

## Patentansprüche

1. Quirl für eine Küchenmaschine, der einen Schaft aufweist, von dem in radialer Richtung, gleichmäßig winkelversetzt bogenförmig ausgebildete Bügel auskragen, die an ihren auskragenden Enden miteinander verbunden sind, dadurch gekennzeichnet, daß mehr als vier bogenförmige Bügel vorgesehen sind, daß zur Verbindung der auskragenden Enden der bogenförmigen Bügel ein konzentrisch zum Schaft und mit radialem Abstand gegenüber demselben verlaufender Ring vorgesehen ist, in den die Bügel mit ihren vom Schaft auskragenden Enden münden, und daß in einer Umfangsrichtung des Ringes gesehen gleichmäßig verteilt, abwechselnd eine Anzahl Bügel in einer axialen Richtung des Schaftes und eine weitere Anzahl Bügel in der entgegengesetzten axialen Richtung des Schaftes bogenförmig verlaufen.

2. Quirl nach Anspruch 1, dadurch gekennzeichnet, daß in einer Umfangsrichtung des Ringes gesehen unmittelbar aufeinanderfolgend jeweils ein Bügel in einer axialen Richtung des Schaftes und der darauffolgende Bügel in der entgegengesetzten axialen Richtung des Schaftes bogenförmig verläuft.

3. Quirl nach Anspruch 1 oder 2, dadurch gekennzeichnet, daß die bogenförmigen Bügel halbkreisförmig ausgebildet sind.

4. Quirl nach einem der vorhergehenden Ansprüche, dadurch gekennzeichnet, daß die Anzahl der bogenförmigen Bügel mit zwölf gewählt ist.

## Claims

1. An agitator for a food processor which comprises a spindle from which arcuate whisks extend in radial direction in uniform angular distribution, which whisks are interconnected at their outer ends, characterized in that more than four arcuate whisks are provided, in that for the interconnection of the outer ends of the arcuate whisks a ring is provided which extends concentrically with and at a radial distance from the spindle, at which ring the whisks terminate with their ends remote from the spindle, and in that in uniform distribution in circumferential direction of the ring alternately one number of whisks extend in one axial direction of the spindle and a further number of whisks extend in the opposite axial direction of the spindle in an arcuate manner.

2. An agitator as claimed in Claim 1, characterized in that, viewed in a circumferential direction of the ring and in immediate succession, each time one whisk extends in an arcuate manner in one axial direction of the spindle and the subsequent whisk extends in an arcuate manner in the opposite axial direction of the spindle.

3. An agitator as claimed in Claim 1 or 2, characterized in that the arcuate whisks are constructed so as to be semi-circular.

4. An agitator as claimed in any of the preceding Claims, characterized in that the number of arcuate whisks is chosen to be twelve.

## Revendications

1. Fouet pour robot de cuisine, qui comporte un arbre à partir duquel font saillie, dans la direction radiale, selon un décalage angulaire régulier, des étriers en arc qui sont reliés l'un à l'autre à leurs extrémités saillantes, caractérisé en ce que plus de quatre étriers en arc sont prévus, les extrémités saillantes des étriers en arc sont reliées par un anneau s'étendant concentriquement à l'arbre et espacé de celui-ci d'une certaine distance radiale, anneau dans lequel les étriers débouchent par leurs extrémités en saillie de l'arbre, et qu'il y a, répartis uniformément dans la direction périphérique de l'anneau et en alternance, un certain nombre d'étriers s'étendant en arc dans la direction axiale de l'arbre et un autre nombre d'étriers s'étendant également en arc dans la direction axiale opposée de l'arbre.

2. Fouet selon la revendication 1, caractérisé en ce que, vu dans une direction périphérique de l'anneau et immédiatement en succession, chaque fois un étrier s'étend en arc dans une direction axiale de l'arbre et l'étrier suivant s'étend en arc dans la direction axiale opposée de l'arbre.

3. Fouet selon la revendication 1 ou 2, caractérisé en ce que les étriers en arc sont conformés en demi-cercles.

4. Fouet selon l'une quelconque des revendications précédentes, caractérisé en ce que le nombre d'étriers en arc est de douze.
